Europäisches Patentamt

**European Patent Office**

**Office européen des brevets**

(11) Publication number: **0 145 326**
A2

# EUROPEAN PATENT APPLICATION

(21) Application number: **84307903.9**

(22) Date of filing: **14.11.84**

(51) Int. Cl.⁴: **G 01 C 3/32**

(30) Priority: **15.11.83 GB 8330400**

(43) Date of publication of application: **19.06.85**
**Bulletin 85/25**

(84) Designated Contracting States: **AT BE CH DE FR IT LI
LU NL SE**

(71) Applicant: **GEC AVIONICS LIMITED, Airport Works,
Rochester Kent ME1 2XX (GB)**

(72) Inventor: **Marshall, Ian, 15, Trotwood Dickens Park,
Chigwell Essex (GB)**

(74) Representative: **Hoste, Colin Francis et al, The General
Electric Company p.l.c. Central Patent Department
(Chelmsford Office) Marconi Research Centre West
Hanningfield Road, Great Baddow Chelmsford CM2 8HN,
Essex (GB)**

(54) A distance measuring arrangement.

(57) A distance measuring arrangement uses two optical sensors spaced apart from each other along the optical axis of the arrangement, so that the images of a distant object have different degrees of de-focus at each sensor. The two resulting processed electrical signals have correspondingly different contrast values from which the range of the object can be determined.

EP 0 145 326 A2

## A DISTANCE MEASURING ARRANGEMENT

This invention relates to a distance measuring arrangement. It is particularly suitable for use in connection with the measurement of relatively short distances of the order of a hundred metres or less. The need often arises to measure distances with a reasonable degree of accuracy by means of a remote sensor of some kind, but many previously proposed systems of an automatic nature can be very bulky and/or consume a great deal of power.

This invention seeks to provide an improved distance measuring arrangement.

According to this invention, a distance measuring arrangement includes a focussing optical system for producing an image of an external field of view such that the image moves transversely with respect to a longitudinal axis of the optical system; two optical sensors positioned at different optical distances along the direction of the longitudinal axis and arranged to receive images of the same or adjacent portions of the field of view; and means responsive to the degree of defocus of the respective images representative of the distance of the imaged portions of the field of view. Here, the term longitudinal refers to directions perpendicular to the plane or planes containing the image. The transverse image movement may be generated from relative movement of the external field of view with respect to the arrangement, or an image scanning system can be provided within the arrangement.

The sensors may be physically spaced apart along the direction of the optical axis, or alternatively, they can be placed in a common plane but behind light transmissive materials of differing refractive indices so as to give different optical path lengths. In the

2

latter case, a transparent block of glass or the like could simply be placed in front of one of the sensors.

Conveniently, the focussing optical system is arranged to produce a sharply focussed image for those portions of the field of view which are located at "infinity", the term infinity being used in its conventional optical sense.

The contrast of an image as sensed by the optical sensors is highly dependent upon the extent to which they are in focus - their output has the greatest contrast when they are exactly in focus, and the contrast drops off with increasing defocus. By measuring the contrast of the image at different locations along the longitudinal axis of the optical system, the true position of an exactly focussed image can be deduced and hence the distance of the portion of the field of view which gives rise to the image.

It is not, of course, necessary for the arrangement to provide as an output, a numerical statement of distance, as for some applications it is merely necessary to know when the distance between two bodies (one of which carries the distance measuring device) reaches a predetermined threshold value. Similarly, for example, the output of the arrangement can be used to control the position of a movable body so as to keep it at a fixed distance from another body which might also be movable.

The invention is further described by way of example, with reference to the accompanying drawings, in which:

Figure 1 is a diagram illustrating the optical principles of a distance measuring arrangement in accordance with this invention,

Figure 2 is an explanatory diagram,

Figure 3 is a schematic diagram of processing circuits forming part of the arrangement, and

Figure 4 illustrates an alternative arrangement in accordance with the invention, which does not utilise an internal image scanning system.

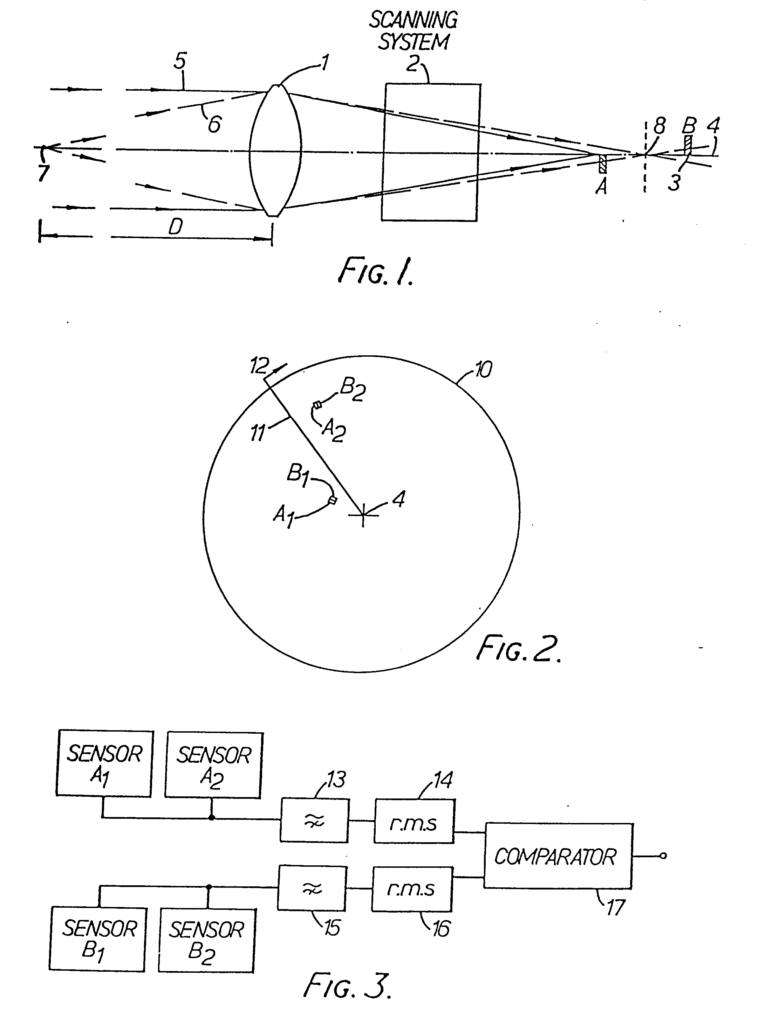

Referring to Figure 1, the distance measuring arrangement includes a focussing arrangement 1 which in this example is represented by a simple lens, and an image scanning system 2, represented simply by the light transmissive block. Light passing through the focussing system 1 and the scanning system 2 falls upon two photo-sensors 3 identified as A and B respectively. As can be seen, the two sensors 3A and 3B are positioned at different distances along an optical axis 4, (in this example, axis 4 is in the principal axis of the focussing system 1). The focussing system 1 is such that light 5 arriving from infinity is brought to an exact focus at the sensor 3A whereas light arriving from a relatively close point 7, assumed to be positioned at a distance D from the focussing system 1, is brought to an exact focus at a point 8 which is exactly midway between the two sensors 3A and 3B.

The scanning system 2 can be of any conventional kind which causes an image to scan transversely across the two sensors 3A and 3B. For example, the scanning system could be of the kind which incorporates a rapidly rotating polygon mirror. Alternatively, the scanning system 2 could be of the kind in which a two-dimensional field of view is scanned as a radial line which rotates about a principal optical axis. The latter kind of scanning system is assumed and a diagramatic representation of the projection of the sensors on to the external field of view as illustrated in Figure 2.

In Figure 2, the principle optical axis is represented at 4 and two pairs of sensors A1, B1 and A2, B2 are positioned at different radial distances from the principal optical axis 4. Although in Figure 1, the two sensors are shown as being positioned on the principal optical axis, this is by no means essential and they may be positioned on arbitrary optical axes. The total field of view of the optical system is represented by the circumference of the circle 10 and the scanning system sweeps out a radial sector represented by the straight line 11 which rotates about the principal optical axis in the direction of the arrow 12. Thus, an object within the field of view of the optical system forms an image in the focal plane of the focussing system 1 as the scanning system 2 sweeps the radial sector around the circle 10. As it may not be known in advance where abouts in the field of view is the object whose distance is to be measured, it is preferred to position a number of pairs of sensors around the field of view at different radial distances, even though in Figure 2 only two such pairs are shown.

In practice, the sensors B1 and B2 will be positioned in a different focal plane to the sensors A1 and A2 by analogy with the arrangement shown in Figure 1. Alternatively, if it is desired to place all four sensors physically in the same plane, then a plate of transparent glass could be positioned immediately above the sensors B1 and B2 so as to increase the effective optical path length between them and the optical system. In practice, it is important that both sensors of a pair view the same region of the distant field of view and thus they are placed close together, care being taken that one sensor does not cast a shadow on the other. In addition, the difference in the longitudinal positions of the two sensors of a given pair is very small, typically, 0.7mm is quite sufficient.

The outputs of these two sensors A and B are processed so that the contrast of the optical image which each receives, can be processed and compared with each other so that the plane of exact focus of a distant object can be determined. For example, in Figure 1, an object positioned at distance D will produce an exact focus in the plane 8. This means that the two sensors A and B receive de-focussed images which have exactly the same degree of de-focus or contrast. Thus, as the body approaches or recedes from the arrangement, the moment at which it is precisely a distance D away can be determined by noting that the contrast of the two signals from the two detectors are exactly the same.

A circuit which enables this particular function to be achieved is illustrated in Figure 3. The two sensors A1 and A2 are connected in parallel and fed via a highpass filter 13 to a circuit 14 which generates a signal having a level which is proportional to the root mean square of the varying signal passed by the filter 13. The filter acts to select predetermined frequency components of the output of the sensors. The level of this signal is representative of the degree of contrast of the optical image which falls upon the two sensors A1 and A2. A similar highpass filter 15 and circuit for producing the root mean square value 16, are provided for the two sensors B1 and B2. If the two circuits 14 and 16 generate signals which are of exactly the same level, then the condition illustrated in Figure 1 is satisfied; that is to say, the images falling on the A sensors have exactly the same contrast as the images falling on the B sensors, and hence the object giving rise to the images is at the distance D from the device. Thus, the output of the circuits 14 and 16 are fed into a simple comparator 17 which provides the necessary output signal.

The distance measuring arrangement can clearly take a more versatile nature. By actually measuring the level of the signal provided by the root mean square circuits 14 and 16, the distance of an object can be calculated, and the plane of the exact focus need not lie between the two sensors. A knowledge of the distances can be used to adjust the focus of an associated optical system so as to keep a distance object exactly in focus.

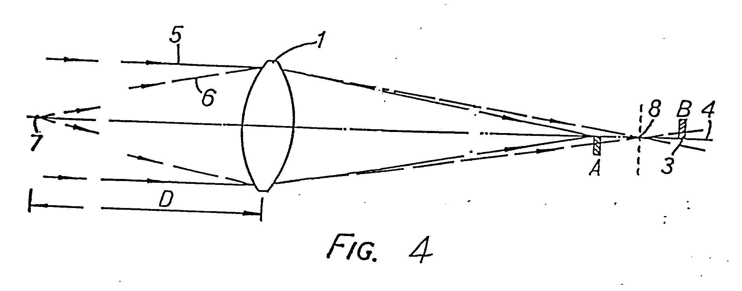

Figure 4 shows an alternative arrangement in which movement of the arrangement itself relative to its external field of view causes the image to move transversely to the sensors A and B. The same reference numera as in Figure 1 are used for like parts. Movement of the external scene achieves scanning of the sensors across the field of view providing that the direction of movement is not parallel to the optical axis 4. It is necessary to know the approximate type and rate of scene movement in order to extract a true measure of distance from the processing circuits shown in Figure 3. As before, the total field of view is represented by the circumference of the circle 10, in Figure 2, over which the scene rotates in the direction of the arrow 12.

Claims

1.    A distance measuring arrangement including a focussing optical system for producing an image of an external field of view and such that the image moves transversely with respect to a longitudinal axis of the optical system; two optical sensors positioned at different optical distances along the direction of the longitudinal axis and arranged to receive images of the same or adjacent portions of the field of view; and means responsive to the degree of defocus of the respective images present at the optical sensors for providing a signal  representative of the distance of the imaged portions of the field of view.

2.    A distance measuring arrangement as claimed in claim 1 in which the optical sensors are arranged in pairs, with the two sensors of each pair being spaced apart so as to be positioned at physically different distances along a longitudinal axis of the optical system.

3.    A distance measuring arrangement as claimed in claim 2 and wherein each pair  of sensors is positioned with respect to a different optical axis of the optical system.

4.    A distance measuring arangement as claimed in any of the preceding claims and wherein the focussing optical system is arranged to produce a sharply focussed image for  those portions of the field of view which are located at infinity.

5.    A distance measuring arrangement as claimed in  any of the preceding claims and wherein the image is caused to scan, relative to the sensors, in a circular sense about the principal axis of the optical system.

6.    A distance measuring arrangement as claimed in any of the preceding claims and wherein the means for moving said image transversely with respect of a longitudinal axis comprises an image scanning system and focussing elements of the optical system.

0145326

8

7. A distance measuring arrangement as claimed in any of the preceding claims and wherein the image scanning system is such as to project the scene on to an image which scans, relative to the sensors, in a circular sense about the principal axis of the optical system.

8. A distance measuring arrangement as claimed in any of the preceding claims, and wherein electrical output signals obtained from two sensors at different positions along a common optical axis are processed to generate respective signals representative of the image contrast at each sensor, and wherein means are provided for comparing the contrast of said signals, or signals derived therefrom.

9. A distance measuring arrangement as claimed in claim 8 and wherein said respective signals are derived from predetermined frequency components of the outputs of said sensors.

10. A distance measuring arrangement as claimed in any of the preceding claims and wherein said two optical sensors are arranged to receive simultaneously images of the same or adjacent portions of the field of view.

0145326

1/2

SCANNING SYSTEM

FIG. 1.

FIG. 2.

SENSOR A₁ SENSOR A₂ ≈ r.m.s COMPARATOR SENSOR B₁ SENSOR B₂ ≈ r.m.s

FIG. 3.

0145326

FIG. 4